# EUROPÄISCHE PATENTSCHRIFT

(11) **EP 2 576 324 B1**
(45) Veröffentlichungstag und Bekanntmachung des Hinweises auf die Patenterteilung: **17.12.2014**
(21) Anmeldenummer: 11730190.3
(22) Anmeldetag: 30.05.2011
(51) Int. Cl.: B62D 15/02

(54) **VERFAHREN UND VORRICHTUNG ZUM UNTERSTÜTZTEN PARKEN EINES KRAFTFAHRZEUGS**
METHOD AND DEVICE FOR ASSISTING PARKING OF A MOTOR VEHICLE
PROCEDE ET DISPOSITIF D'AIDE AU STATIONNEMENT D'UN VEHICULE AUTOMOBILE

(30) Priorität: 04.06.2010 DE 102010022718; 04.06.2010 DE 102010022716
(43) Veröffentlichungstag der Anmeldung: 10.04.2013
(73) Patentinhaber: Volkswagen Aktiengesellschaft, 38436 Wolfsburg (DE)
(72) Erfinder: HÜGER, Philipp, 38471 Rühen (DE); SCHWITTERS, Frank, 38154 Königslutter (DE)
(86) Internationale Anmeldenummer: PCT/EP2011/002656
(87) Internationale Veröffentlichungsnummer: WO 2011/151045

(56) Entgegenhaltungen:
- EP-A2- 1 510 440
- JP-A- 2003 175 852
- US-A1- 2009 259 365
- US-B1- 6 424 895

## Beschreibung

Die Erfindung betrifft ein Verfahren zum unterstützten Parken eines Kraftfahrzeugs gemäß dem Oberbegriff des Anspruchs 1 sowie einen Parklenkassistenten gemäß dem Oberbegriff des Anspruchs 9.

Moderne Kraftfahrzeuge werden in zunehmendem Maße mit Komfort- und Assistenzsystemen ausgeliefert, die dem Fahrer das Führen des Fahrzeugs erleichtern und/oder die Sicherheit der Fahrzeugführung erhöhen. Zu derartigen Assistenzsystemen zählen Parkassistenzsysteme, die den Fahrer beim Ein- oder Ausparken eines Fahrzeugs in Parklücken unterstützen, die parallel oder quer zur Fahrbahn ausgerichtet sein können. Hierbei ist die längere Kante einer im Wesentlichen als rechteckig angenommenen Parklücke ausschlaggebend für die Klassifizierung in eine Längs- oder Querparklücke. Die Parkassistenzsysteme umfassen eine Sensorik, mit denen die Umgebung des Kraftfahrzeugs nach Hindernissen und/oder Freiräumen durchsucht wird. Ist eine Parklücke in einem Freiraum erkannt, so liefert das System dem Fahrer Hinweise, wie er das Fahrzeug beim Ein- oder Ausparken zu führen hat. Dies kann soweit gehen, dass das Assistenzsystem einzelne oder alle für das Ein- oder Ausparken notwendigen Fahrzeugsysteme steuert.

Aus der WO 2008/055567 ist ein Parklenkassistenzsystem mit mindestens einem Sensor zum Erfassen von Hindernissen und/oder Freiflächen in einer Umgebung quer zur Längsrichtung des Kraftfahrzeugs, einem Auswerte- und Steuersystem zum Auswerten der Sensorsignale und Steuern von Fahrzeugsystemen bekannt, um in einem aktivierten automatischen Einparkmodus des Kraftfahrzeugs in eine Parklücke ohne einen Lenkeingriff eines Fahrers einzuparken, wobei der automatische Parkmodus mittels des Erfassens von Handlungen des Fahrers ohne eine Bestätigung des Fahrers bezüglich eines Einparkvorschlags aktivierbar ist. Diese Aktivierung des automatischen Einparkmodus ohne Bestätigung des Fahrers setzt allerdings zuverlässig voraus, dass eine zum Einparken zu überfahrende Fläche unter Berücksichtigung von Sicherheitsabständen und Toleranzen als frei von Hindernissen erkannt ist. Sollte dies nicht der Fall sein, so muss vor der Aktivierung des automatischen Einparkmodus eine entsprechende Fahrereingabe, d.h. eine Bestätigung des Einparkvorschlags, erfolgen.

Ferner ist aus der DE 10 2006 026 092 A1 ein Verfahren zur Steuerung eines zumindest teilautomatisch durchzuführenden Einparkvorgangs bekannt, durch welchen ein Kraftfahrzeug von einer Ist-Position in eine Sollposition gebracht wird. Dabei wird ein Bild der Umgebung des Kraftfahrzeugs sowie ein virtuelles Zielobjekt in der Umgebung durch eine Anzeigeeinheit im Innern des Kraftfahrzeugs dargestellt. In Abhängigkeit von Bedienaktionen des Fahrers wird die Bildposition des Zielobjekts verändert und als Folge davon wird die Sollposition des Kraftfahrzeugs verändert und der Einparkvorgang entsprechend angepasst.

Ferner zeigt die DE 100 45 616 A1 ein Verfahren zum automatischen Einparken eines Kraftfahrzeugs in eine Parklücke, bei dem mittels einer Videokamera das seitliche Umfeld eines Kraftfahrzeugs als Draufsicht darstellt wird und der Fahrer mittels eines Touch-Screens die gewünschte Parklücke auswählt.

Die Entgegenhaltung US 2009/259365 A1 ist als nächstliegender Stand der Technik nach dem Oberbegriff des Anspruchs 1 zu sehen und offenbart ein semiautomatisches Parklenkassistenzsystem zum Unterstützen des Ausrichtens eines Kraftfahrzeugs in einer Parklücke, wobei das vom Fahrer rückwärtig in eine parallel zum Straßenrand verlaufende Parklücke eingeparkte Fahrzeug noch nicht parallel zu dem längsseitigen Rand der Parklücke ausgerichtet ist. Um diese Ausrichtung des Fahrzeugs zu erreichen, wird das semiautomatische Parklenksystem aktiviert, welches eine Änderungsrichtung ermittelt, in der die Ausrichtung des Fahrzeugs verändert werden soll. Nachdem die Änderungsrichtung feststeht, bewirkt das Parklenkassistenzsystem eine maximale Einlenkung der lenkbaren Räder in die Änderungsrichtung bei einer Vorwärtsbewegung des Fahrzeugs und eine maximale Einlenkung der lenkbaren Räder entgegen der Änderungsrichtung bei einer Rückwärtsbewegung. Ferner kann das semiautomatische Parklenkassistenzsystem auch zum Ausparken aus einer Längsparklücke verwendet werden.

Nachteilig bei den bekannten Verfahren ist, dass die Bedienoberfläche zur Interaktion des Fahrers mit dem Fahrerassistenzsystem oftmals nicht ausreichend ergonomisch ausgelegt ist. Ferner ist die Komplexität der Bedienoberfläche zur Interaktion des Fahrers mit dem Fahrerassistenzsystem zu hoch.

Der Erfindung liegt daher die Aufgabe zugrunde, die Ergonomie eines Einparkassistenten zum unterstützten Einparken eines Kraftfahrzeugs zu verbessern und die Bedienung eines Einparkassistenten zum unterstützten Ein- und Ausparkens eines Kraftfahrzeugs zu vereinfachen.

Diese Aufgabe wird durch ein Verfahren zum unterstützten Einparken eines Kraftfahrzeugs mit den Merkmalen des Anspruchs 1 sowie durch einen Parklenkassistenten mit den Merkmalen des Anspruchs 8 gelöst. Bevorzugte Ausführungsformen der Erfindung sind Gegenstand der Unteransprüche.

Bei dem erfindungsgemäßen Verfahren zum Auswählen einer Parkassistenzfunktion aus einer vorgegebenen Vielzahl von Parkassistenzfunktionen eines Parklenkassistenten mittels eines Eingabeelements des Parklenkassistenten und dem Fahrtrichtungsgeber eines Kraftfahrzeugs, sind die Parkassistenzfunktionen in zwei Gruppen angeordnet. Wobei die erste Gruppe ein Einparken des Fahrzeugs betreffenden Funktionen umfasst und die zweite Gruppe die ein Ausparken des Fahrzeugs betreffenden Funktionen umfasst. Es wird eine Auswahl zwischen den zwei Funktionsgruppen als Funktion des Zündschalterzustands und der zurückgelegten Fahrstrecke s des Kraftfahrzeugs getroffen. Dabei umfasst die erste Funktionsgruppe die Funktionen "Vorwärts Einparken in eine Querparklücke", "Rückwärts Einparken in eine Querparklücke" sowie "Rückwärts Einparken in eine Längsparklücke" und die zweite Funktionsgruppe die Funktionen "Ausparken aus einer Längsparklücke" sowie "Ausparken aus einer Querparklücke".

Mit anderen Worten, das Verfahren unterscheidet automatisch zwischen Einparkfunktionen und Ausparkfunktionen. Ferner weist das Kraftfahrzeug eine Sensorik zur Bestimmung des Umfeldes des Kraftfahrzeugs auf.

Vorzugsweise wird die erste Funktionsgruppe ausgewählt, wenn der Zündschalter den Zustand "Ein" aufweist und eine Fahrstrecke s größer einer vorgegebenen Schwelle a (s > a) nach dem Zündschalterzustand "Ein" zurückgelegt wurde. Es wird die zweite Funktionsgruppe ausgewählt, wenn der Zündschalter den Zustand "Ein" aufweist und nach dem Zündschalterzustand "Ein" eine Fahrstrecke s kleiner oder gleich der vorgegebenen Schwelle a (s ≤ a) zurückgelegt wurde. Die vorgegebene Schwelle kann beispielsweise 5 m oder weniger betragen, so dass der Parklenkassistent nach dem Einschalten der Zündung und einer Fahrtstrecke kleiner 5 m automatisch die zweite Funktionsgruppe Ausparken wählt. Im Extremfall kann die vorgegebene Schwelle auf den Wert Null gesetzt werden.

Vorzugsweise sind nach erfolgter Auswahl der jeweiligen Funktionsgruppe die Parkassistenzfunktionen einer Gruppe in einer vorgegebenen Reihenfolge mittels des Eingabeelements auswählbar.

Weiter bevorzugt wird die Richtung des Einparkens oder des Ausparkens durch den Fahrrichtungsgeber festgelegt. Dabei kann beispielsweise die Fahrerassistenzfunktion durch Einlegen des Vorwärts oder Rückwärtsgangs aktiviert werden.

Ferner kann die aktuelle Fahrerassistenzfunktion und nachfolgend die Ausführung einer ausgewählten Fahrerassistenzfunktion in einer Anzeige symbolisch dargestellt werden.

In einer weiteren bevorzugten Ausführungsform werden Parklücken im Umfeld des Kraftfahrzeugs in Längs- und Querparklücken bestimmt und klassifiziert, und es wird eine Parkassistenzfunktion aus der bestimmten Funktionsgruppe der Parkassistenzfunktionen als Funktion der klassifizierten Parklücke ausgewählt. Auf diese Weise kann ein automatisches Anbieten der geeigneten Ein- bzw. Ausparkfunktion erreicht werden, was für den Fahrer eine wesentliche Erleichterung darstellt. Mit anderen Worten wird die Ergonomie der Bedienung eines Parklenkassistenten erheblich verbessert und somit wird die Bedienung eines Parklenkassistenten im Wesentlichen selbsterklärend gestaltet.

Weiterhin wird vorzugsweise die Richtung des Einparkens oder des Ausparkens durch die klassifizierte Parklücke festgelegt und/oder wird durch den Fahrrichtungsgeber festgelegt. Es ist auch möglich, beispielsweise die Richtung des Einparkens auf der Beifahrerseite, d.h. bei Rechtsverkehr auf der rechten Seite, als Voreinstellung (Default-Wert) festzulegen, die dann durch den Blinker als prioritätshöhere Instanz aufgehoben werden kann. Mit dieser Maßnahme wird die Automatisierung des Parklenkassistenten weiter erhöht und damit die Bedienung des Parkassistenten durch den Fahrer weiter vereinfacht.

Ein erfindungsgemäßer Parklenkassistent zur Durchführung des im vorangegangenen beschriebenen Verfahrens umfasst:
- eine Umfeldsensorik zur Bestimmung des Umfeldes eines Kraftfahrzeugs,
- eine Auswerteeinheit zur Bestimmung von Parklücken im Umfeld des Kraftfahrzeugs,
- eine Steuereinheit zum Steuern der Parkassistenzfunktionen bezüglich des Ein- oder Ausparkens, und
- ein Eingabeelement zur Aktivierung des Parklenkassistenten und Anwahl seiner Funktionen, wobei
- der Parklenkassistent eine Auswahleinrichtung aufweist, die eine Auswahl zwischen zwei Funktionsgruppen des Parklenkassistenten als Funktion des Zündschalterzustands und der zurückgelegten Fahrstrecke des Kraftfahrzeugs trifft, wobei die erste Funktionsgruppe Einparkfunktionen und die zweite Funktionsgruppe Ausparkfunktionen betrifft.

Dabei umfasst die erste Funktionsgruppe die Funktionen "Vorwärts Einparken in eine Querparklücke", "Rückwärts Einparken in eine Querparklücke" sowie "Rückwärts Einparken in eine Längsparklücke" und die zweite Funktionsgruppe umfasst die Funktionen "Ausparken aus einer Längsparklücke" sowie "Ausparken aus einer Querparklücke".

Vorzugsweise wählt die Auswahleinrichtung die erste Funktionsgruppe aus, wenn der Zündschalter den Zustand "Ein" aufweist und eine Fahrstrecke s größer einer vorgegebenen Schwelle a (s > a) nach dem Zündschalterzustand "Ein" zurückgelegt wurde, und es wird die zweite Funktionsgruppe ausgewählt, wenn der Zündschalter den Zustand "Ein" aufweist und nach dem Zündschalterzustand "Ein" eine Fahrstrecke s kleiner oder gleich der vorgegebenen Schwelle a (s ≤ a) zurückgelegt wurde.

Weiter bevorzugt führt die Auswerteeinheit eine Bestimmung und Klassifizierung von Parklücken im Umfeld des Kraftfahrzeugs durch, wobei die Auswahleinrichtung aus der ausgewählten Funktionsgruppe eine Parkassistenzfunktion als Funktion der klassifizierten Parklücke auswählt. Durch diese Maßnahmen wird ein automatisches Anbieten der geeigneten Ein- bzw. Ausparkfunktion erreicht, was für den Fahrer eine wesentliche Erleichterung darstellt.

Bevorzugte Ausführungsformen der Erfindung werden nachfolgend anhand der Zeichnungen erläutert.

Dabei zeigt
- Fig.1: eine Darstellung der Funktionsgruppen sowie der Assistenzfunktionen in tabellarischer Form,
- Fig. 2: den Ablauf der Auswahl der Funktionen der ersten Funktionsgruppe in schematischer Darstellung (HMI Einparken), [HMI = Mensch-Maschine-Schnittstelle]
- Fig.3: den Ablauf der Auswahl der Funktionen der zweiten Funktionsgruppe in schematischer Darstellung (HMI Ausparken),
- Fig. 4: eine Darstellung des Ablaufs eines mehrzügigen Längseinparkvorgangs,
- Fig. 5: eine Darstellung des Ablaufs eines mehrzügigen Quereinparkvorgangs,
- Fig. 6: eine Darstellung des Ablaufs eines mehrzügigen Längsausparkvorgangs,
- Fig. 7: eine Darstellung der Wiederaufnahme einer Einparkfunktion nach deren Abbruch,
- Fig. 8: den Ablauf der automatischen Auswahl der Funktionen der ersten Funktionsgruppe in schematischer Darstellung (HMI Einparken),
- Fig.9: die Situation eines Fahrzeugs in einer Längsparklücke, und
- Fig.10: die Situation eines Fahrzeugs in einer Querparklücke.

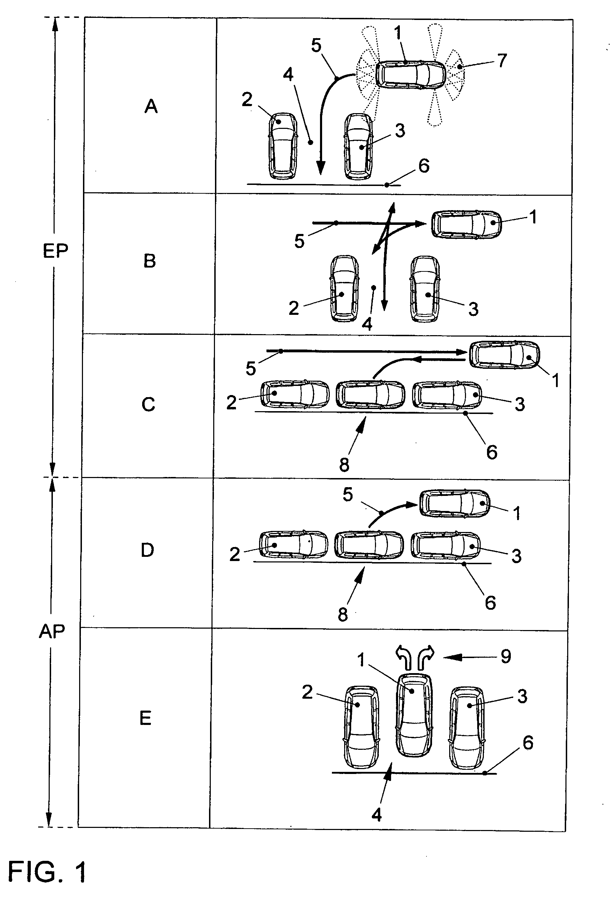

Fig. 1 zeigt eine Übersicht über die Assistenzfunktionen A - E eines Parklenkassistenten in der Form einer Tabelle, wobei die Assistenzfunktionen A - E in zwei Funktionsgruppen untergliedert sind, nämlich die Funktionsgruppe Einparken EP und die Funktionsgruppe Ausparken AP.

Die Funktionsgruppe EP Einparken umfasst die Funktion A - Vorwärts Einparken in eine Querparklücke, die Funktion B - Rückwärts Einparken in eine Querparklücke, und die Funktion C - Rückwärts Einparken in eine Längsparklücke.

Die zweite Funktionsgruppe AP Ausparken umfasst die Funktion D - Ausparken aus einer Längsparklücke und die Funktion E - Rückwärts Ausparken aus einer Querparklücke.

Dabei werden die in der Tabelle der Fig. 1 dargestellten Funktionen A - E jeweils durch ein Bild erläutert, wobei die Bilder im Wesentlichen selbsterklärend sind.

Die Darstellung der Funktion A zeigt ein Egofahrzeug 1, welches vorwärts in eine durch zwei Fahrzeuge 2, 3 gebildete Querparklücke 4 längs eines Fahrweges 5 einparkt, wobei die Querparklücke 4 nach hinten beispielsweise durch einen Bordstein 6 begrenzt wird. Ferner ist die das Umfeld des Egofahrzeugs 1 ausmessende Sensorik 7 schematisch dargestellt.

Die Darstellung der Funktion B verdeutlicht das rückwärts Einparken in eine Querparklücke 4 eines Egofahrzeugs 1, wobei die Querparklücke links und rechts von anderen parkenden Fahrzeugen 2 und 3 begrenzt ist. Der Fahrweg 5 des Egofahrzeuges 1 ist in dem dargestellten Fall dreizügig, d.h. ein erster Rückwartszug, nachfolgend ein Zug vorwärts und anschließend der abschließende Rückwärtszug in die Querparklücke 4.

Die Darstellung der Funktion C verdeutlicht das rückwärts Einparken in eine Längsparklücke 8 eines Egofahrzeugs 1, wobei die Längsparklücke durch zwei Fahrzeuge 2, 3 begrenzt wird. Der Fahrweg 5 des Egofahrzeugs 1 ist im Allgemeinen mehrzügig, da das Egofahrzeug 1 innerhalb der Längsparklücke 8 zum Ausrichten des Egofahrzeugs 1 oftmals je nach Länge der Längsparklücke 8 vorwärts und rückwärts rangieren muss.

Die der zweiten Funktionsgruppe AP "Ausparken" zuzurechnende Funktion D verdeutlicht das Ausparken eines Egofahrzeugs 1 aus einer Längsparklücke 8, die zwischen zwei Fahrzeugen 2, 3 angeordnet ist und auf der von der Fahrbahn abgewandten Seite eine Begrenzung, beispielsweise in Form eines Bordsteins 6, aufweist. Der Fahrweg 5 des Ausparkvorgangs kann als Funktion der Länge der Längsparklücke 8 innerhalb der Parklücke mehrzügig sein.

Die Darstellung der Ausparkfunktion E verdeutlicht das rückwärts Ausparken eines Egofahrzeugs 1 aus einer Querparklücke 4, die von zwei Fahrzeugen 2, 3 begrenzt wird und an der Stirnseite einen Bordstein 6 als Begrenzung aufweist. Dabei kann das Egofahrzeug 1 aus der Querparklücke 4 in zwei Richtungen rückwärts ausparken, was durch das Bezugszeichen 9 symbolisiert ist.

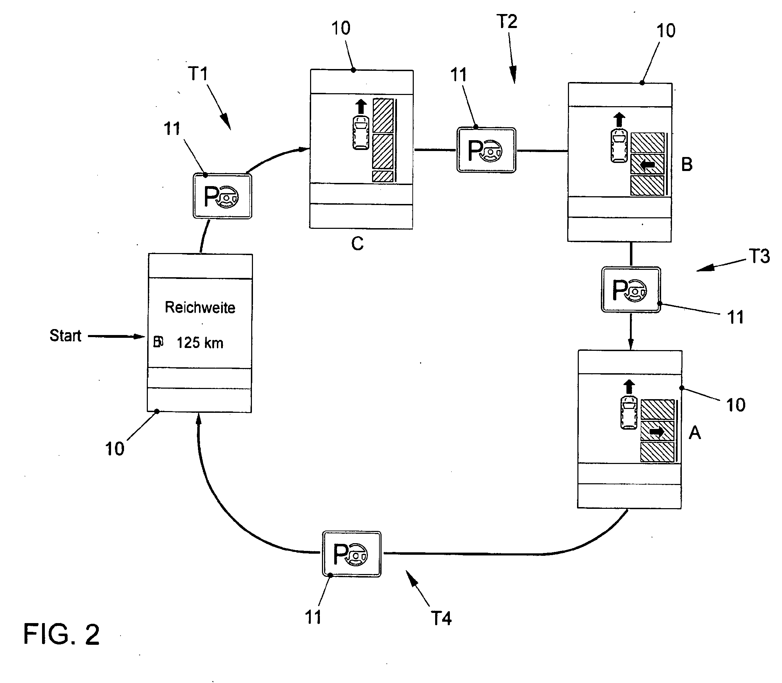

Fig. 2 zeigt den Ablauf der ersten Funktionsgruppe EP "Einparken", wobei die in Fig. 1 beschriebenen Einparkfunktionen A, B und C durch den in Fig. 2 dargestellten HMI-Ablauf durch den Fahrer angewählt werden. Ausgangspunkt ist die mit Start gekennzeichnete Anzeige 10, die aktuell beispielsweise ein Tankstellensymbol mit einer verbleibenden Reichweite von 125 km anzeigt. Unter der Voraussetzung, dass nach dem Einschalten der Zündung, d.h. Klemme 15 = Ein, eine Strecke s größer einer vorgegebenen Schwelle, beispielsweise 5 m, zurückgelegt wurde, trifft das Assistenzsystem eine Vorauswahl hinsichtlich der Funktionsgruppe und beschränkt die Auswahl auf die Funktionsgruppe der Einparkfunktionen. Eine erste Betätigung T1 des PLA-Tasters 11 bewirkt so ein Anbieten der Funktion C "Rückwärts Einparken in eine Längsparklücke", was eine Darstellung einer entsprechenden Symbolik in der Anzeige 10 auslöst. Eine zweite Betätigung T2 des PLA-Tasters 10 bewirkt ein Anbieten der Einparkfunktion B "Rückwärts Einparken in eine Querparklücke" mit einer entsprechenden symbolischen Darstellung in der Anzeige 10. Eine dritte Betätigung T3 des PLA-Tasters 10 bewirkt ein Anbieten der letzten Einparkfunktion C "Vorwärts Einparken in eine Querparklücke" der ersten Funktionsgruppe. Entscheidet der Fahrer keine Einparkfunktion auszuwählen, so setzt eine weitere Betätigung des PLA-Tasters 10 das System wieder in den Grundzustand zurück, d.h. das Assistenzsystem beendet den HMI-Ablauf hinsichtlich der ersten Funktionsgruppe und das System ist sozusagen wieder am Ausgangspunkt Start angelangt. Die Anordnung der Einparkfunktionen in der Reihenfolge C-B-A ist nicht zwingend. Beispielsweise kann vorgesehen sein, dass der Fahrer die Reihenfolge nach seinen Vorlieben anordnet. Weiterhin erfolgt die Auswahl der Seite der Parklückensuche durch den Fahrtrichtungsgeber des Fahrzeugs, d.h. den Blinker.

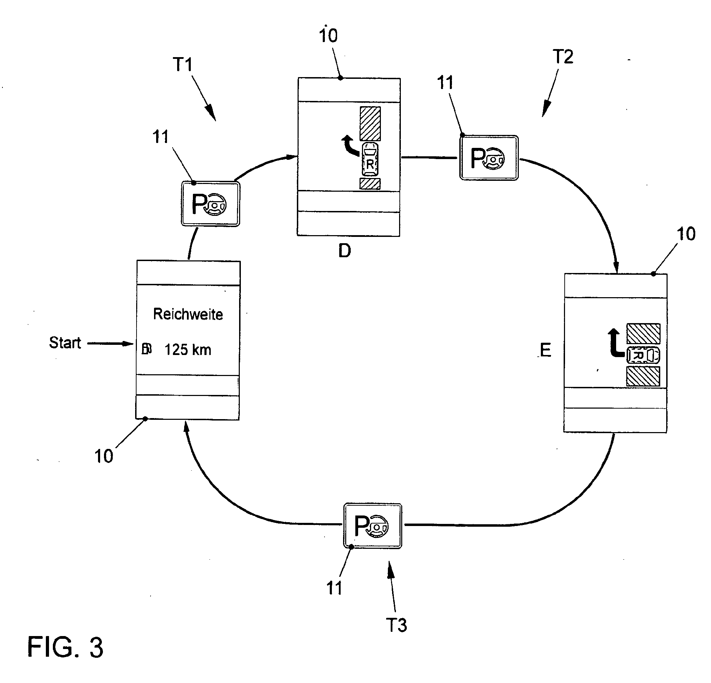

Fig. 3 zeigt den Ablauf der zweiten Funktionsgruppe AP "Ausparken", wobei die in Fig. 1 beschriebenen Ausparkfunktionen D und E durch den in Fig. 3 dargestellten HMI-Ablauf durch den Fahrer angewählt werden. Ausgangspunkt ist die mit Start gekennzeichnete Anzeige 10, die aktuell beispielsweise ein Tankstellensymbol mit einer verbleibenden Reichweite von 125 km anzeigt. Unter der Voraussetzung, dass nach dem Einschalten der Zündung, d.h. Klemme 15 = Ein, höchstens eine Strecke s kleiner oder gleich einer vorgegebenen Schwelle zurückgelegt wurde, trifft das Assistenzsystem eine Vorauswahl hinsichtlich der Funktionsgruppe und beschränkt die Auswahl auf die Ausparkfunktionen D und E der zweiten Funktionsgruppe AP. Eine erste Betätigung T1 des PLA-Tasters 11 bewirkt so ein Anbieten der Funktion D "Vorwärts Ausparken aus einer Längsparklücke", was eine Darstellung einer entsprechenden Symbolik in der Anzeige 10 auslöst. Eine zweite Betätigung T2 des PLA-Tasters 10 bewirkt ein Anbieten der Ausparkfunktion E "Rückwärts Ausparken aus einer Querparklücke" mit einer entsprechenden symbolischen Darstellung in der Anzeige 10. Eine dritte Betätigung T3 des PLA-Tasters 10 bewirkt ein Zurücksetzen des Systems in den Ausgangszustand, d.h. das System befindet sich wieder im durch Start gekennzeichneten Zustand. Auch beim Ausparken erfolgt die Auswahl der Seite der Parklückensuche durch den Fahrtrichtungsgeber des Fahrzeugs, d.h. den Blinker.

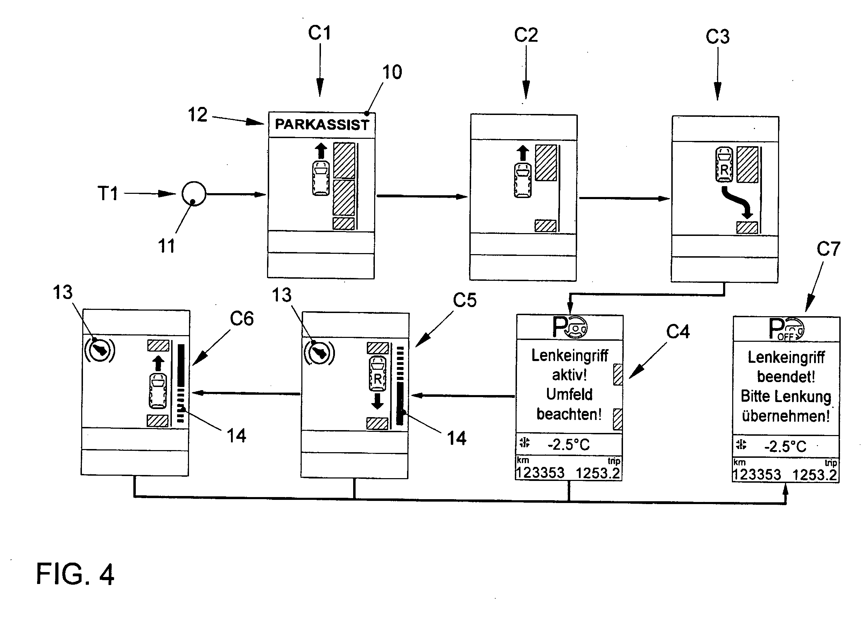

Fig. 4 zeigt den Ablauf der Assistenzfunktion C "Rückwärts Einparken in eine Längsparklücke" im Detail anhand der Schritte C1 bis C7. Nachdem der Fahrer eine erste Betätigung T1 des PLA-Tasters 11 ausführt, wird überprüft, ob seit dem Einschalten der Zündung Klemme 15 = Ein eine Fahrtstrecke s größer als die bereits erwähnte vorgegebene Schwelle zurückgelegt wurde. Ist dies der Fall, so wird in der Anzeige in einem ersten Schritt C1 die Überschrift "Park Assist" für einen vorgegebenen Zeitraum, beispielsweise 5 Sekunden, eingeblendet, um den Fahrer zu informieren, dass der Parkassistent aktiv ist. Ferner wird in dem ersten Schritt C1 auf der rechten Fahrseite eine geschlossene Reihe in Längsparklücken parkender Fahrzeuge angezeigt, wodurch die Seite des Suchens einer Parklücke und der Typ der Parklücke festgelegt und dem Fahrer verdeutlicht wird. Die Seite der Parklückensuche wird durch den Fahrtrichtungsgeber festgelegt, d.h. vor oder nach der Betätigung des PLA-Tasters 11 muss der Fahrer den Blinker betätigen, um dem System die Seite des erwünschten Einparkens zu vermitteln. Es ist auch möglich, dass rechtseitiges Einparken als Voreinstellung festgelegt ist, so dass nur bei linksseitigem Einparken die Betätigung des Blinkers notwendig ist.

Hat das System in der Vorbeifahrt des Egofahrzeuges mit einer Maximalgeschwindigkeit von 40 km/h bei einem Abstand zur Reihe des Parkstreifens von 0,5 bis 1,5 m eine geeignete Parklücke gefunden, so wird dies im Schritt C2 in der Anzeige 10 dargestellt. Da das Egofahrzeug zum unterstützten oder automatischen Einparken sich in einer geeigneten Ausgangsposition befinden muss, wird das Erreichen dieser Ausgangsposition dem Fahrer in einem dritten Schritt C3 angezeigt. Mit anderen Worten, hat der Fahrer durch geeignetes Fahren des Fahrzeugs an der Längsparklücke entlang eine geeignete Einparkposition gefunden, so ändert sich die Darstellung der Anzeige in die des Schrittes C3.

Um den rückwärtigen Einparkvorgang initiieren und durchführen zu können, legt nun der Fahrer im vierten Schritt C4 den Rückwärtsgang ein und mittels der Darstellung der Anzeige 10 wird dem Fahrer mitgeteilt, dass das System einen aktiven Lenkeingriff vornimmt und der Fahrer das Umfeld beachten soll. Anschließend wird im fünften Schritt C5 der Fahrer nach der Anzeige des erforderlichen Fahrtrichtungswechsels durch das Einblenden des Bremsfußes 13 zum Bremsen aufgefordert, wobei während des Stillstands des Fahrzeugs das Stellen der Räder vorgenommen wird. Ferner wird durch einen Bargraphen 14, mit beispielsweise 16 Stufen, der Fortschritt des Einparkzuges dargestellt. Befindet sich das Fahrzeug bereits in einer akzeptablen Parkposition, so wird dies dem Fahrer im siebten Schritt C7 angezeigt und die Parklenkassistenz ist beendet. Mit anderen Worten, der Fahrer wird zur Übernahme der Lenkung aufgefordert.

Ist die Parkposition des Egofahrzeugs in der Parklücke nicht akzeptabel, beispielsweise weil der Abstand zu dem hinteren Fahrzeug nicht ausreichend ist, so wird der Fahrer im sechsten Schritt C6 durch das Einblenden des Bremsfußes 13 zum Bremsen aufgefordert, während das System die Räder in die entsprechende Position bringt. Der Fahrer legt dann den Vorwärtsgang ein, um in der Parklücke das Fahrzeug auszurichten. Ist das Fahrzeug richtig ausgerichtet, so beendet das System in dem siebten Schritt C7 den Einparkvorgang mit dem Hinweis an den Fahrer in der Anzeige 10, das Lenkrad wieder zu übernehmen.

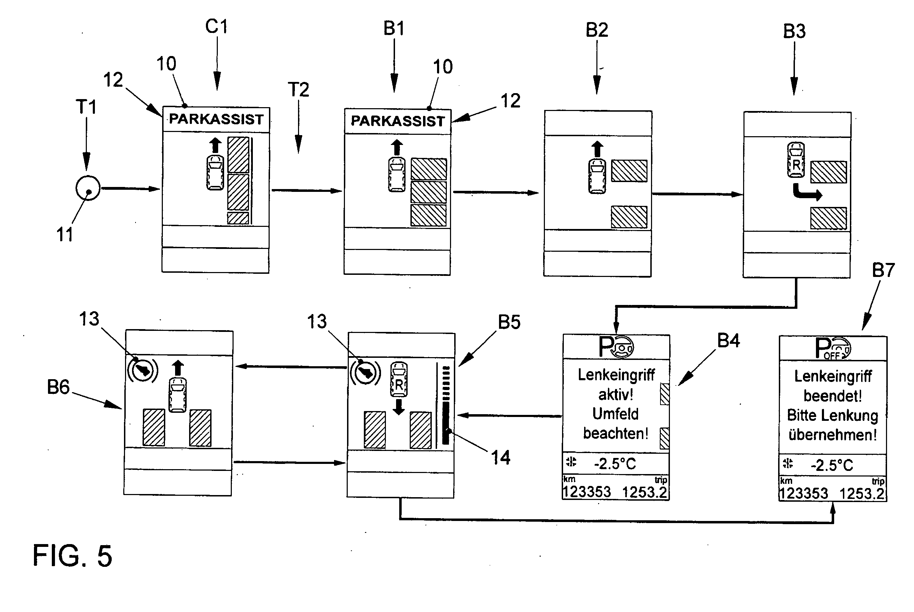

Fig. 5 zeigt den Ablauf der Assistenzfunktion B "Rückwärts Einparken in eine Querparklücke" im Detail anhand der Schritte B1 bis B7. Nachdem der Fahrer eine erste Betätigung T1 des PLA-Tasters 11 ausführt, wird in der Anzeige in einem ersten Schritt C1 die Überschrift "Park Assist" für einen vorgegebenen Zeitraum, beispielsweise 5 Sekunden, eingeblendet, um den Fahrer zu informieren, dass der Parkassistent aktiv ist und dass die Einparkfunktion C aktiv ist. Ein erneutes Betätigen T2 des PLA-Tasters 11 überführt das System in die Einparkfunktion B "Rückwärts Einparken in eine Querparklücke", was durch eine geeignete Darstellung einer rechtsseitigen Querparklückenreihe in der Anzeige im Schritt B1 dargestellt wird. Dabei wird die Seite des Einparkens vorzugsweise durch die Betätigung des Blinkers festgelegt. Ferner wird dem Fahrer durch das Einblenden des Hinweises 12 "Park Assist" in der Anzeige die Aktivität des Parklenkassistenten [=Parkassistenten] verdeutlicht.

Hat das System in der Vorbeifahrt des Egofahrzeuges eine geeignete Querparklücke gefunden, so wird dies im Schritt B2 in der Anzeige 10 dargestellt. Da das Egofahrzeug zum unterstützten oder automatischen Einparken sich in einer geeigneten Ausgangsposition befinden muss, wird das Erreichen dieser Ausgangsposition dem Fahrer in einem dritten Schritt B3 angezeigt. Mit anderen Worten, hat der Fahrer durch geeignetes Fahren des Fahrzeugs entlang der Querparklücke eine geeignete Einparkposition gefunden, so ändert sich die Darstellung der Anzeige in die des Schrittes B3.

Um den rückwärtigen Einparkvorgang initiieren und durchführen zu können, legt nun der Fahrer im vierten Schritt B4 den Rückwärtsgang ein und mittels der Darstellung der Anzeige 10 wird dem Fahrer mitgeteilt, dass das System einen aktiven Lenkeingriff vornimmt und der Fahrer das Umfeld beachten soll. Anschließend wird im fünften Schritt B5 der Fahrer nach dem Zurücklegen einer Mindeststrecke durch das Einblenden des Bremsfußes 13 zum Bremsen aufgefordert, wobei während des Stillstands des Fahrzeugs das Stellen der Räder vorgenommen wird. Ferner wird durch einen Bargraphen 14, mit beispielsweise 16 Stufen, der Fortschritt des Einparkvorgangs dargestellt. Befindet sich das Fahrzeug bereits in einer akzeptablen Parkposition, so wird dies dem Fahrer im siebten Schritt B7 angezeigt und die Parklenkassistenz ist beendet. Mit anderen Worten wird der Fahrer zur Übernahme der Lenkung aufgefordert.

Ist die Parkposition des Egofahrzeugs in der Parklücke nicht akzeptabel, so wird der Fahrer im sechsten Schritt B6 durch das Einblenden des Bremsfußes 13 zum Bremsen aufgefordert, während das System die Räder in die entsprechende Position bringt. Der Fahrer legt dann den Vorwärtsgang ein, um das Fahrzeug auszurichten. Ist das Fahrzeug richtig ausgerichtet, so führt das Einlegen des Rückwärtsgangs das System wieder zum Schritt B5 zurück. Ist nun die Position des Fahrzeugs in der Querparklücke in Ordnung, so beendet das System im siebten Schritt B7 den Einparkvorgang mit dem Hinweis an den Fahrer in der Anzeige 10, das Lenkrad wieder zu übernehmen.

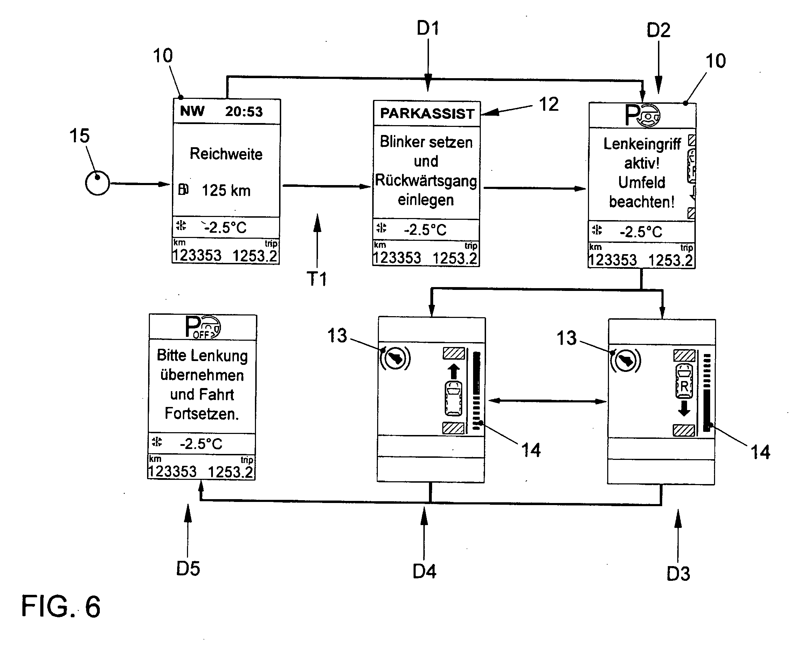

Fig. 6 zeigt den Ablauf der Ausparkfunktion D "Ausparken aus einer Längsparklücke" im Detail anhand der Schritte D1 bis D5. Nach dem Einschalten der Zündung 15, d.h. Klemme 15 =.Ein, erscheint in der Anzeige 10 die Standardinformation für den Fahrer, also beispielsweise Reichweiteninformation, Außentemperatur und Kilometerlaufleistung des Fahrzeugs und zurückgelegte Strecke seit dem letzten Tanken, etc..

Eine erste Bedienung T1 des PLA-Tasters führt zu einer Überprüfung, ob seit dem Einschalten der Zündung das Fahrzeug eine vorgegebene Wegstrecke zurückgelegt hat. Ist dies nicht der Fall, d.h. gefahrene Wegstrecke s ≤ Schwelle a, so wählt der Parkassistent automatisch die zweite Funktionsgruppe "Ausparken" aus und es wird in einem ersten Schritt D1 der Fahrer zum Einlegen des Rückwärtsgangs und zum Blinkersetzen aufgefordert. Ferner wird die Information "Park Assist" eingeblendet, um dem Fahrer den Systemzustand anzuzeigen. Hat der Fahrer den Blinker gesetzt und den Rückwärtsgang eingelegt, so wird die Ausparkfunktion Im zweiten Schritt D2 aktiviert und dies dem Fahrer in der Anzeige 10 mittels "Lenkeingriff aktiv! Umfeld beachten" angezeigt und er wird zur Beobachtung des Umfeldes aufgefordert. Je nach Ausgangslage des Fahrzeugs in der Längsparklücke geht das Assistenzsystem in den Schritt D3 oder D4 über, so dass das Fahrzeug innerhalb der Längsparklücke in eine zum Ausparken günstige Lage manövriert wird. In der Anzeige 10 wird der Fortschritt des Vorgangs über einen Bargraphen 14 dargestellt, wobei ferner der Fahrer gegebenenfalls mit dem Bremsfußsymbol 13 zum Bremsen aufgefordert wird. Dabei entspricht der dritte Schritt D3 einer Rückwärtsbewegung und der Schritt D4 einer Vorwärtsbewegung mit entsprechender Gangwahl. Ist das assistierte Ausparken beendet, so wird der Fahrer im fünften Schritt D5 zur Übernahme der Lenkung und zur Weiterfahrt aufgefordert.

Der Ablauf der Funktion A beziehungsweise E entspricht im Wesentlichen dem der Funktion B beziehungsweise D und daher ist eine eigenständige Erläuterung nicht notwendig.

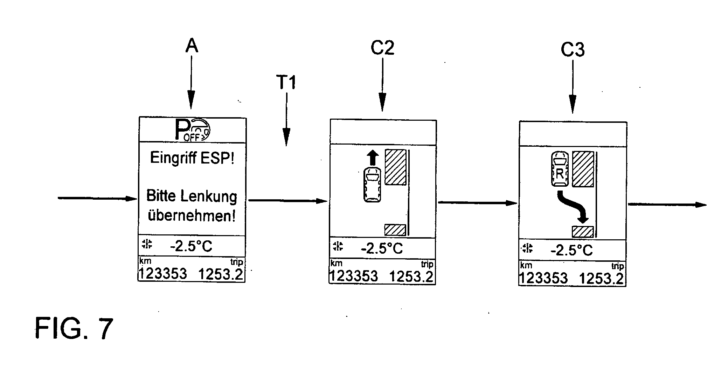

Fig. 7 zeigt die Wiederaufnahme einer Einparkfunktion nach einem Abbruch derselben. Wurde beispielsweise eine ESP-Funktion [Elektrisches-Stabilitäts-Programm] während der Ausführung des Beginns der Einparkfunktion C aktiviert, so führt dies zu einem Abbruch einer Einparkfunktion, was im Schritt A angezeigt und der Fahrer zur Übernahme der Lenkung aufgefordert wird. Eine Betätigung T1 des PLA-Tasters führt das System wieder zurück und es erfolgt eine Auswahl der Einparkfunktion C mit dem Einblenden des ersten Schrittes C1 der Einparkfunktion C2. Nach Erreichen einer geeigneten Einparkposition wird diese im Schritt C3 angezeigt und der Einparkvorgang wird, wie ein Fig. 4 beschrieben, fortgesetzt.

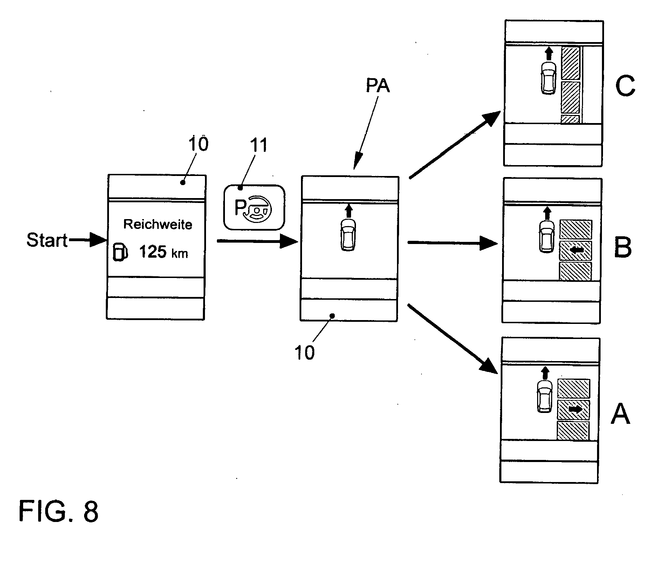

Fig. 8 zeigt den automatischen Ablauf der Anwahl der in Fig. 1 dargestellten Einparkfunktionen A, B und C für den Fall, dass eine Fahrtstrecke s größer einer vorgegebenen Schwelle a nach dem Zündschalterzustand "Ein" zurückgelegt wurde. Zum Beginn, der in Fig. 8 mit Start gekennzeichnet ist, befindet sich die Parklenkassistenz im inaktiven Zustand. Daher werden in der Anzeige 10 nur allgemeine Informationen angezeigt, wie im vorliegenden Beispiel die noch vorhandene Reichweite von 125 km bis zum nächsten Tankstop. Mit einer Betätigung des PLA-Tasters 11 (PLA = Parklenkassistent) geht das System in den Parkassistenzmodus PA über und die Anzeige 10 zeigt ein den Parkassistenzmodus anzeigendes Symbol an. Durch die im bzw. am Kraftfahrzeug vorhandene Umfeldsensorik, wie beispielsweise Ultraschall, Radar und/oder Videokamera, wird das Umfeld des Kraftfahrzeugs vermessen, nach vorhandenen Parklücken durchsucht und diese in Längsparklücken oder Querparklücken klassifiziert. Aufgrund des erkannten Parklückentyps und gegebenenfalls weiterer Informationen, wie beispielsweise die Ausrichtung des Fahrzeugs zur Parklücke, Breite der Fahrbahn, Platz zum Rangieren etc., die ebenfalls mittels der Umfeldsensorik erfassbar sind, wählt das Parkassistenzsystem automatisch die Einparkfunktion A, B oder C aus. Der Fahrer braucht zur Aktivierung der ausgesuchten Einparkfunktion beispielsweise nur noch den Rückwärtsgang einzulegen und den Ablauf der Einparkfunktion zu überwachen bzw. den Anweisungen der entsprechenden Einparkfunktion zu folgen. Es ist für den Fahrer selbstverständlich möglich den automatischen Vorschlag des Parklenkassistenten nicht zu folgen, sondern durch weitere Betätigung des PLA-Tasters 11 den Vorschlag des Parklenkassistenten zu überstimmen und andere Parkassistenzfunktionen aufzurufen.

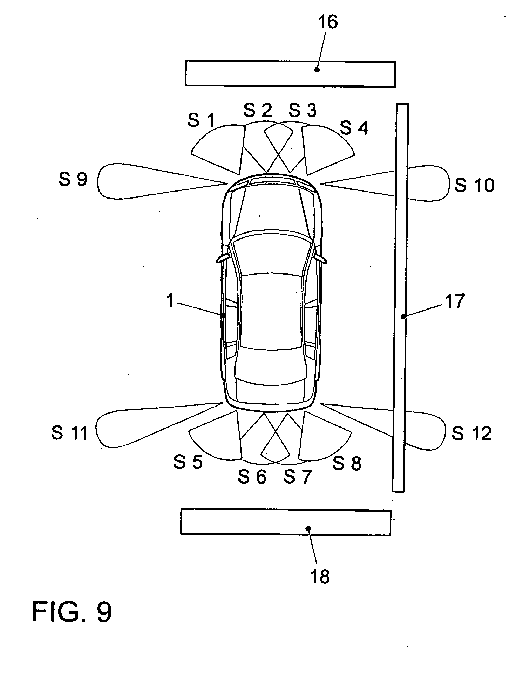

Fig. 9 zeigt die Situation eines parkenden Fahrzeugs 1 in einer Längsparklücke in schematischer Darstellung. Das Fahrzeug ist mit einer Vielzahl von Umfeldsensoren ausgerüstet, und zwar vordere Sensoren S1 bis S4 zur Ausmessung des vorderen Umfeldes des Kraftfahrzeugs, hintere Sensoren S5 bis S8 zur Beobachtung des hinteren Umfeldes des Kraftfahrzeugs, seitliche linke Sensoren S9, S11 zur Beobachtung des linken seitlichen Umfeldes des Kraftfahrzeugs sowie seitlich rechte Sensoren S10, S12 zur Beobachtung des seitlich rechten Umfeldes des Kraftfahrzeugs 1. Befindet sich nun das beschriebene Fahrzeug 1 mit seinen Sensoren in einer Längsparklücke, wurde seit dem Einschalten der Zündung keine Strecke oder eine Strecke kleiner oder gleich einer vorgegebenen Schwelle zurückgelegt, und betätigt der Fahrer den beispielsweise in Fig. 8 beschriebenen PLA-Taster 11, so messen die Sensoren im Beispiel der Fig. 9 Abstände zu den Hindernissen oder Begrenzungen 16, 17 und 18. Einzig die Sensoren S9 und S11 messen keine Abstände, d.h. detektieren keine Hindernisse. Aus den Ergebnissen ermittelt das Parklenksystem eine Längsparklücke mit einer Ausparkrichtung nach rechts und bietet die Längsausparkfunktion D automatisch dem Fahrer an.

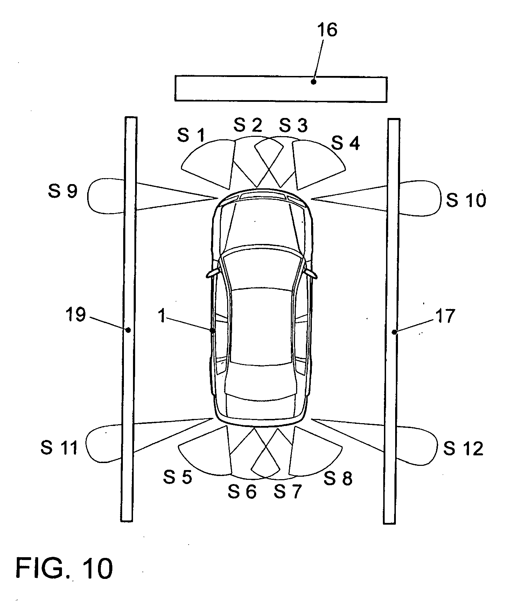

Fig. 10 zeigt in analoger Weise zu Fig. 9 ein parkendes Egofahrzeug 1 in einer Querparklücke, die Begrenzungen 16, 17 und 19 aufweist. Messungen der Umfeldsensoren S1 bis S 12 ergeben hier, dass die Sensoren S1 bis S4 sowie S9 bis S12 die Begrenzungen 16, 17 und 19 detektieren, während die Sensoren S5 bis S8 keinen Abstand messen. Folglich wird automatisch das Ausparkprogramm E dem Fahrer unter der Voraussetzung angeboten, dass seit Einschalten der Zündung, d.h. Klemme 15 = Ein, keine Wegstrecke s oder höchstens eine Wegstrecke s kleiner oder gleich einer vorgegebenen Schwelle a zurückgelegt wurde, d.h. s ≤ a. Mit dem Einlegen des Rückwärtsgangs wird die Ausparkfunktion E "Ausparken.aus einer Querparklücke" aktiviert und mittels der Betätigung des Richtungsgebers durch den Fahrer wird die Richtung des rückwärtigen Ausparkens festgelegt.

### Bezugszeichenliste

- EP: Funktionsgruppe Einparken
- AP: Funktionsgruppe Ausparken
- A: Funktion "Vorwärts Einparken in eine Querparklücke"
- B: Funktion "Rückwärts Einparken in eine Querparklücke"
- C: Funktion "Rückwärts Einparken in eine Längsparklücke"
- D: Funktion "Ausparken aus einer Längsparklücke"
- E: Funktion "Rückwärts Ausparken aus einer Querparklücke"

- 1: Egofahrzeug
- 2: Fahrzeug
- 3: Fahrzeug
- 4: Querparklücke
- 5: Fahrweg
- 6: Bordstein
- 7: Sensorik
- 8: Längsparklücke
- 9: Ausparkrichtungen
- 10: Anzeige
- 11: PLA-Taster
- 12: Anzeige Parkassistent
- 13: Symbol Bremsfuß
- 14: Fortschritt Parkzug
- 15: Klemme 15 (Zündung ein)
- 16: Begrenzung
- 17: Begrenzung
- 18: Begrenzung
- 19: Begrenzung

- B1: Schritt 1 der Parkfunktion B
- B2: Schritt 2 der Parkfunktion B
- B3: Schritt 3 der Parkfunktion B
- B4: Schritt 4 der Parkfunktion B
- B5: Schritt 5 der Parkfunktion B
- B6: Schritt 6 der Parkfunktion B
- B7: Schritt 7der Parkfunktion B
- C1: Schritt 1 der Parkfunktion C
- C2: Schritt 2 der Parkfunktion C
- C3: Schritt 3 der Parkfunktion C
- C4: Schritt 4 der Parkfunktion C
- C5: Schritt 5 der Parkfunktion C
- C6: Schritt 6 der Parkfunktion C
- C7: Schritt 7 der Parkfunktion C

- D1: Schritt 1 der Parkfunktion D
- D2: Schritt 2 der Parkfunktion D
- D3: Schritt 3 der Parkfunktion D
- D4: Schritt 4 der Parkfunktion D
- D5: Schritt 5 der Parkfunktion D

- PA: Parkassistenzmodus

- S1: Sensor
- S2: Sensor
- S3: Sensor
- S4: Sensor
- S5: Sensor
- S6: Sensor
- S7: Sensor
- S8: Sensor
- S9: Sensor
- S10: Sensor
- S11: Sensor
- S12: Sensor

- Start: Beginn HMI-Zyklus

- T1: erste Tasterbetätigung
- T2: zweite Tasterbetätigung
- T3: dritte Tasterbetätigung
- T4: vierte Tasterbetätigung

## Patentansprüche

1. Verfahren zum Auswählen einer Parkassistenzfunktion aus einer vorgegebenen Vielzahl von Parkassistenzfunktionen (A, B, C, D, E) eines Parklenkassistenten eines Kraftfahrzeugs (1) mittels eines Eingabeelements (11) des Parklenkassistenten und dem Fahrtrichtungsgeber des Kraftfahrzeugs (1), wobei das Kraftfahrzeug (1) eine Sensorik (7) zur Bestimmung des Umfeldes des Kraftfahrzeugs (1) aufweist,
**dadurch gekennzeichnet, dass**
die Parkassistenzfunktionen in zwei Gruppen (EP, AP) angeordnet sind, wobei die erste Gruppe (EP) die ein Einparken des Fahrzeugs (1) betreffenden Funktionen Vorwärts Einparken in eine Querparklücke (A), Rückwärts Einparken in eine Querparklücke (B) sowie Rückwärts Einparken in eine Längsparklücke (C) umfasst und die zweite Gruppe (AP) die ein Ausparken des Fahrzeugs (1) betreffenden Funktionen Ausparken aus einer Längsparklücke (D) sowie Ausparken aus einer Querparklücke umfasst, und wobei eine Auswahl zwischen den zwei Funktionsgruppen (EP, AP) als Funktion des Zündschalterzustands und der zurückgelegten Fahrstrecke des Kraftfahrzeugs (1) getroffen wird.

2. Verfahren nach Anspruch 1, **dadurch gekennzeichnet, dass** die erste Funktionsgruppe (EP) ausgewählt wird, wenn der Zündschalter den Zustand "Ein" aufweist und eine Fahrstrecke größer einer vorgegebenen Schwelle nach dem Zündschalterzustand "Ein" zurückgelegt wurde, und dass die zweite Funktionsgruppe (AP) ausgewählt wird, wenn der Zündschalter den Zustand "Ein" aufweist und nach dem Zündschalterzustand "Ein" eine Fahrstrecke kleiner oder gleich der vorgegebenen Schwelle zurückgelegt wurde.

3. Verfahren nach Anspruch 1 oder 2, **dadurch gekennzeichnet, dass** nach erfolgter Auswahl der Funktionsgruppen (EP, AP) die Parkassistenzfunktionen einer Gruppe in einer vorgegebenen Reihenfolge mittels des Eingabeelements (11) auswählbar sind.

4. Verfahren nach einem der vorangegangenen Ansprüche, **dadurch gekennzeichnet, dass** die Richtung des Einparkens oder des Ausparkens durch den Fahrrichtungsgeber festgelegt wird.

5. Verfahren nach Anspruch 1 oder 2, **dadurch gekennzeichnet, dass** eine Bestimmung und Klassifizierung von Parklücken im Umfeld des Kraftfahrzeugs (1) in Längs- und Querparklücken erfolgt, und als Funktion der klassifizierten Parklücke eine Parkassistenzfunktion (A, B, C, D, E) aus der bestimmten Funktionsgruppe der Parkassistenzfunktionen ausgewählt wird.

6. Verfahren nach Anspruch 5, **dadurch gekennzeichnet, dass** die Richtung des Einparkens oder des Ausparkens sich aus der klassifizierten Parklücke ergibt und/oder durch den Fahrtrichtungsgeber festgelegt wird.

7. Verfahren nach einem der vorangegangenen Ansprüche, **dadurch gekennzeichnet, dass** die aktuelle Fahrerassistenzfunktion und nachfolgend die Ausführung einer ausgewählten Fahrerassistenzfunktion in einer Anzeige (10) symbolisch dargestellt werden.

8. Parklenkassistent eines Kraftfahrzeugs (1) zur Durchführung des Verfahrens nach einem der vorangegangenen Ansprüche mit
einer Umfeldsensorik (7) zur Bestimmung des Umfeldes des Kraftfahrzeugs (1),
einer Auswerteeinheit zur Bestimmung von Parklücken (7, 8) im Umfeld des Kraftfahrzeugs (1),
einer Steuereinheit zum Steuern der Parkassistenzfunktionen (A, B, C, D, E) bezüglich Ein- oder Ausparkens, und
einem Eingabeelement (11) zur Aktivierung des Parklenkassistenten und Anwahl seiner Funktionen,
**dadurch gekennzeichnet, dass**
der Parklenkassistent eine Auswahleinrichtung aufweist, die eine Auswahl zwischen zwei Funktionsgruppen (EP, AP) des Parklenkassistenten als Funktion des Zündschalterzustands und des zurückgelegten Fahrwegs des Kraftfahrzeugs (1) trifft, wobei die erste Funktionsgruppe (EP) die ein Einparken des Fahrzeugs (1) betreffenden Funktionen Vorwärts Einparken in eine Querparklücke (A), Rückwärts Einparken in eine Querparklücke (B) sowie Rückwärts Einparken in eine Längsparklücke (C) und die zweite Gruppe (AP) die ein Ausparken des Fahrzeugs (1) betreffenden Funktionen Ausparken aus einer Längsparklücke (D) sowie Ausparken aus einer Querparklücke betrifft.

9. Parklenkassistent nach Anspruch 8, **dadurch gekennzeichnet, dass** die Auswahleinrichtung die erste Funktionsgruppe (EP) auswählt, wenn der Zündschalter den Zustand "Ein" aufweist und eine Fahrstrecke größer einer vorgegebenen Schwelle nach dem Zündschalterzustand "Ein" zurückgelegt wurde, und dass die zweite Funktionsgruppe (AP) ausgewählt wird, wenn der Zündschalter den Zustand "Ein" aufweist und nach dem Zündschalterzustand "Ein" eine Fahrstrecke kleiner oder gleich der vorgegebenen Schwelle zurückgelegt wurde.

10. Parklenkassistent nach einem der Ansprüche 8 oder 9, **dadurch gekennzeichnet, dass** der Parklenkassistent eine Auswerteeinheit zur Bestimmung und Klassifizierung von Parklücken im Umfeld des Kraftfahrzeugs (1) aufweist, wobei die Auswahleinheit aus der ausgewählten Funktionsgruppe (EP, AP) eine Parkassistenzfunktion (A, B, C, D, E) als Funktion der klassifizierten Parklücke auswählt.

## Claims

1. Method for selecting a parking assistance function from amongst a predefined large number of parking assistance functions (A, B, C, D, E) of a parking steering assistant of a motor vehicle (1) by means of an input element (11) of the parking steering assistant and the driving direction indicator of the motor vehicle (1), with the motor vehicle (1) having a sensor system (7) for determining the area surrounding the motor vehicle (1),
**characterized in that**
the parking assistance functions are arranged in two groups (EP, AP), with the first group (EP) comprising the functions which relate to the vehicle (1) driving into a parking space: driving forward into a bay parking space (A), reversing into a bay parking space (B) and also reversing into a parallel parking space (C), and the second group (AP) comprising the functions which relate to the vehicle (1) driving out of a parking space driving out of a parallel parking space (D) and driving out of a bay parking space, and with a choice being made between the two groups of functions (EP, AP) as a function of the ignition switch state and the distance covered by the motor vehicle (1).

2. Method according to Claim 1, **characterized in that** the first group of functions (EP) is selected when the ignition switch is in the "on" state and a distance which is greater than a predefined threshold has been covered after the ignition switch state "on", and **in that** the second group of functions (AP) is selected when the ignition switch is in the "on" state and a distance of less than or equal to the predefined threshold has been covered after the ignition switch state "on".

3. Method according to Claim 1 or 2, **characterized in that**, after the groups of functions (EP, AP) have been selected, the parking assistance functions of a group can be selected in a predefined order by means of the input element (11).

4. Method according to one of the preceding claims, **characterized in that** the direction of driving into a parking space or driving out of a parking space is established by the driving direction indicator.

5. Method according to Claim 1 or 2, **characterized in that** parking spaces in the area surrounding the motor vehicle (1) are determined and classified into parallel parking spaces and bay parking spaces, and a parking assistance function (A, B, C, D, E) is selected from amongst the determined group of functions of the parking assistance functions as a function of the classified parking space.

6. Method according to Claim 5, **characterized in that** the direction of driving into a parking space or driving out of a parking space is given by the classified parking space and/or is established by the driving direction indicator.

7. Method according to one of the preceding claims, **characterized in that** the current driver assistance function and subsequently the execution of a selected driver assistance function are symbolically displayed on a display unit (10).

8. A parking steering assistant of a motor vehicle (1) for carrying out the method according to one of the preceding claims, having
a surrounding area sensor system (7) for determining the area surrounding the motor vehicle (1),
an evaluation unit for determining parking spaces (4, 8) in the area surrounding the motor vehicle (1),
a control unit for controlling the parking assistance functions (A, B, C, D, E) in respect of driving into a parking space and driving out of a parking space, and an input element (11) for activating the parking steering assistant and selecting one of its functions, **characterized in that**
the parking steering assistant has a selection device which makes a selection between two groups of functions (EP, AP) of the parking steering assistant as a function of the ignition switch state and the distance covered by the motor vehicle (1), with the first group (EP) of functions relating to the functions which relate to the vehicle (1) driving into a parking space :driving forward into a bay parking space: (A), reversing into a bay parking space (B) and also reversing into a parallel parking space (C) and the second group (AP) relating to the functions which relate to the vehicle (1) driving out of a parking space: driving out of a parallel parking space (D) and driving out of a bay parking space.

9. Parking steering assistant according to Claim 8, **characterized in that** the selection device selects the first group of functions (EP) when the ignition switch is in the "on" state and a distance of greater than a predefined threshold has been covered after the ignition switch state "on", and **in that** the second group of functions (AP) is selected when the ignition switch is in the "on" state and a distance of less than or equal to the predefined threshold has been covered after the ignition switch state "on".

10. Parking steering assistant according to either of Claims 8 and 9, **characterized in that** the parking steering assistant has an evaluation unit for determining and classifying parking spaces in the area surrounding the motor vehicle (1), with the selection unit selecting a parking assistance function (A, B, C, D, E) from amongst the selected group of functions (EP, AP) as a function of the classified parking space.

## Revendications

1. Procédé de sélection d'une fonction d'assistance au stationnement parmi une pluralité prédéfinie de fonctions d'assistance au stationnement (A, B, C, D, E) d'un assistant de stationnement d'un véhicule automobile (1) à l'aide d'un élément de saisie (11) de l'assistant de stationnement et de l'indicateur de sens de la marche du véhicule automobile (1), le véhicule automobile (1) possédant un dispositif de détection (7) destiné à déterminer l'environnement du véhicule automobile (1),
**caractérisé en ce que**
les fonctions d'assistance au stationnement sont disposées en deux groupes (EP, AP), le premier groupe (EP) comprenant les fonctions concernant l'entrée en stationnement du véhicule (1) : Entrée en stationnement en marche avant dans un emplacement de stationnement transversal (A), Entrée en stationnement en marche arrière dans un emplacement de stationnement transversal (B) ainsi que Entrée en stationnement en marche arrière dans un emplacement de stationnement longitudinal (C), et le deuxième groupe (AP) comprenant les fonctions concernant la sortie de stationnement du véhicule (1) : Sortie depuis un emplacement de stationnement longitudinal (D) et Sortie depuis un emplacement de stationnement transversal, et une sélection entre les deux groupes de fonctions (EP, AP) étant effectuée en fonction de la position du commutateur d'allumage et du trajet parcouru par le véhicule (1).

2. Procédé selon la revendication 1, **caractérisé en ce que** le premier groupe de fonctions (EP) est sélectionné lorsque le commutateur d'allumage se trouve en position « Marche » et un trajet supérieur à un seuil prédéfini a été parcouru après la position « Marche » du commutateur d'allumage, et **en ce que** le deuxième groupe de fonctions (AP) est sélectionné lorsque le commutateur d'allumage se trouve en position « Marche » et un trajet inférieur ou égal au seuil prédéfini a été parcouru après la position « Marche » du commutateur d'allumage.

3. Procédé selon la revendication 1 ou 2, **caractérisé en ce qu'**après avoir sélectionné les groupes de fonctions (EP, AP), les fonctions d'assistance au stationnement d'un groupe peuvent être sélectionnées dans un ordre prédéfini à l'aide de l'élément de saisie (11).

4. Procédé selon l'une des revendications précédentes, **caractérisé en ce que** le sens de l'entrée en stationnement ou de la sortie de stationnement est déterminé par l'indicateur de sens de la marche.

5. Procédé selon la revendication 1 ou 2, **caractérisé en ce qu'**est effectuée une détermination et une classification des emplacements de stationnement dans l'environnement du véhicule automobile (1) en emplacements de stationnement longitudinaux et transversaux et une fonction d'assistance au stationnement (A, B, C, D, E) est sélectionnée parmi le groupe de fonctions défini de fonctions d'assistance au stationnement en fonction de l'emplacement de stationnement classifié.

6. Procédé selon la revendication 5, **caractérisé en ce que** le sens de l'entrée en stationnement ou de la sortie de stationnement résulte de l'emplacement de stationnement classifié et/ou est défini par l'indicateur de sens de la marche.

7. Procédé selon l'une des revendications précédentes, **caractérisé en ce que** la fonction d'assistance au conducteur actuelle et ensuite l'exécution d'une fonction d'assistance au conducteur sélectionnée sont représentées symboliquement sur un afficheur (10).

8. Assistant de stationnement d'un véhicule automobile (1) destiné à mettre en oeuvre le procédé selon l'une des revendications précédentes, comprenant un dispositif de détection d'environnement (7) destiné à déterminer l'environnement du véhicule automobile (1),
une unité d'interprétation destinée à déterminer les emplacements de stationnement (4, 8) dans l'environnement du véhicule (1),
une unité de commande destinée à commander les fonctions d'assistance au stationnement (A, B, C, D, E) en rapport avec l'entrée en stationnement ou la sortie de stationnement, et
un élément de saisie (11) destiné à activer l'assistant de stationnement et à sélectionner ses fonctions **caractérisé en ce que**
l'assistant de stationnement présente un dispositif de sélection qui effectue une sélection entre deux groupes de fonctions (EP, AP) de l'assistant de stationnement en fonction de la position du commutateur d'allumage et du trajet parcouru par le véhicule (1), le premier groupe de fonctions (EP) concernant les fonctions concernant l'entrée en stationnement du véhicule (1) : Entrée en stationnement en marche avant dans un emplacement de stationnement transversal (A), Entrée en stationnement en marche arrière dans un emplacement de stationnement transversal (B) ainsi que Entrée en stationnement en marche arrière dans un emplacement de stationnement longitudinal (C), et le deuxième groupe (AP) les fonctions concernant une sortie de stationnement du véhicule (1) : Sortie depuis un emplacement de stationnement longitudinal (D) et Sortie depuis un emplacement de stationnement transversal.

9. Assistant de stationnement selon la revendication 8, **caractérisé en ce que** le dispositif de sélection sélectionne le premier groupe de fonctions (EP) lorsque le commutateur d'allumage se trouve en position « Marche » et un trajet supérieur à un seuil prédéfini a été parcouru après la position « Marche » du commutateur d'allumage, et **en ce que** le deuxième groupe de fonctions (AP) est sélectionné lorsque le commutateur d'allumage se trouve en position « Marche » et un trajet inférieur ou égal au seuil prédéfini a été parcouru après la position « Marche » du commutateur d'allumage.

10. Assistant de stationnement selon l'une des revendications 8 ou 9, **caractérisé en ce que** l'assistant au stationnement présente une unité d'interprétation destinée à déterminer et à classifier les emplacements de stationnement dans l'environnement du véhicule (1), l'unité de sélection sélectionnant une fonction d'assistance au stationnement (A, B, C, D, E) parmi le groupe de fonctions (EP, AP) sélectionné en fonction de l'emplacement de stationnement classifié.
